(19) Europäisches Patentamt
European Patent Office
Office européen des brevets

(11) Numéro de publication: **0 297 994 A2**

# (12) DEMANDE DE BREVET EUROPEEN

(21) Numéro de dépôt: **88401713.8**

(22) Date de dépôt: **01.07.88**

(51) Int. Cl.4: **B 01 D 59/30**
B 01 D 59/26, B 01 D 15/04,
B 01 D 15/08

(30) Priorité: **03.07.87 FR 8709485**

(43) Date de publication de la demande:
**04.01.89 Bulletin 89/01**

(84) Etats contractants désignés: **DE GB IT**

(71) Demandeur: **COMMISSARIAT A L'ENERGIE ATOMIQUE**
**31/33, rue de la Fédération**
**F-75015 Paris (FR)**

**CENTRE NATIONAL DE LA RECHERCHE SCIENTIFIQUE (CNRS)**
**15, Quai Anatole France**
**F-75700 Paris Cedex 07 (FR)**

(72) Inventeur: **Carles, Maurice**
**2 Boulevard Laennec**
**F-26700 Pierrelatte (FR)**

**Neige, Roger**
**29, rue James Watte**
**F-26700 Pierrelatte (FR)**

**Niemann, Christian**
**4, Résidence L'Argensol**
**F-84100 Orange (FR)**

**Michel, Alain**
**65, rue Henri GORJIN**
**F-69004 Lyon (FR)**

**Bert, Michel**
**8 Impasse du Capot**
**F-69300 Caluire (FR)**

**Bodrero, Sylvie**
**Les Griottes 58, Place des Basses Barolles**
**F-69230 Saint Genis-Laval (FR)**

**Guyot, Alain**
**7, Place d'Helvetie**
**F-69006 Lyon (FR)**

(74) Mandataire: **Mongrédien, André et al**
**c/o BREVATOME 25, rue de Ponthieu**
**F-75008 Paris (FR)**

## (54) Procédé de séparation chromatographique au moyen de résines échangeuses d'ions pelliculaires, utilisable notamment pour la séparation des isotopes ou des ions, et résines utilisables dans ce procédé.

(57) L'invention concerne un procédé de séparation chromatographique d'espèces chimiques au moyen d'une résine échangeuse d'ions, utilisable notamment pour séparer les isotopes de l'uranium, du bore et de l'azote.

On effectue un échange isotopique entre un isotope de l'élément fixé sur une résine échangeuse d'ions et un autre isotope de l'élément présent dans une phase liquide en contact avec la résine échangeuse d'ions.

Selon l'invention, on utilise pour cet échange, des résines pelliculaires formées de grains composites comportant une âme inerte en polymère et au moins une couche pelliculaire active comportant des groupements échangeurs d'ions. La couche pelliculaire (3) peut être disposée autour d'une âme inerte (1) réalisée par exemple en polyoléfine. La couche pelliculaire (9) peut aussi tapisser les macropores (7) d'un grain macroporeux (5) en polymère inerte. On peut aussi utiliser les résines de la figure 1 pour séparer des ions.

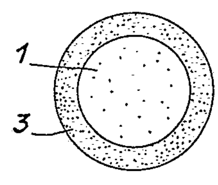


FIG. 1

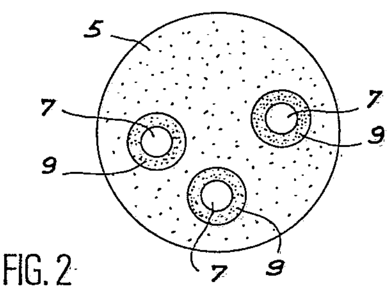


FIG. 2

EP 0 297 994 A2

## Description

# PROCEDE DE SEPARATION CHROMATOGRAPHIQUE AU MOYEN DE RESINES ECHANGEUSES D'IONS PELLICULAIRES, UTILISABLE NOTAMMENT POUR LA SEPARATION DES ISOTOPES OU DES IONS, ET RESINES UTILISABLES DANS CE PROCEDE

La présente invention a pour objet un procédé de séparation chromatographique d'espèces chimiques au moyen d'une résine échangeuse d'ions.

Elle s'applique en particulier à la séparation des isotopes, par exemple des isotopes du bore, de l'azote et de l'uranium.

Elle s'applique également aux procédés de séparation d'ions basés sur une réaction d'échange équilibrée le long de la colonne.

Parmi les procédés d'enrichissement isotopique connus actuellement, on a développé récemment divers procédés d'enrichissement isotopique par voie chimique, destinés notamment à l'enrichissement de l'uranium naturel en isotopes 235, et on a étudié en particulier l'échange entre les ions uranium à deux états de valence en utilisant des résines échangeuses d'ions pour fixer l'uranium dans l'un des deux états de valence. Des procédés de ce type sont décrits dans les brevets français FR-A-2 282 928, FR-A-1600437 et FR-A-1480129 et dans le brevet américain US-A-3511620.

Dans ces procédés, on utilise généralement des résines échangeuses d'ions commerciales telles que les résines Dowex qui sont formées par copolymérisation de styrène et de divinylbenzène avec fixation de groupements échangeurs d'ions du type ammonium quaternaire ou du type sulfonique. Ces résines se présentent généralement sous la forme de grains ayant une granulométrie moyenne d'environ 200 µm. Ainsi, dans ces procédés, la cinétique d'échange est limitée en particulier par la diffusion de l'ion, par exemple de l'uranium, dans le grain de résine. De ce fait, les performances isotopiques d'une installation de séparation utilisant de telles résines échangeuses d'ions sont également limitées car on obtient une valeur relativement importante du temps d'étage et de la hauteur équivalant à un plateau théorique (HEPT).

Aussi, des recherches ont été entreprises pour améliorer ces performances.

Les procédés de séparation d'ions par chromatographie d'échange sont basés sur la migration différentielle des espèces ioniques sur une colonne remplie d'un matériau échangeur d'ions. Par exemple, une résine cationique $R\text{-}SO_3^-X^+$ est tout d'abord conditionnée par le passage d'un éluant contenant un ion $E^+$, de force ionique et de pH déterminé. La résine cationique $R\text{-}SO_3^-X^+$ passe sous la forme $R\text{-}SO_3^-E^+$. Lorsqu'un mélange de cations solutés ($C_1^+$, $C_2^+$, $C_3^+$, ...) est injecté, les cations se fixent sur la résine dans une réaction dynamique d'échange :

$$R\text{-}SO_3^-E^+ \rightleftharpoons R\text{-}SO_3^-C^+ ,$$

caractéristique de chaque ion. Ils sont déplacés graduellement le long de la colonne, poussés par l'effet de masse des cations $E^+$ de l'éluant sur l'équilibre d'échange d'ions. Dans le cas d'une résine anionique, on a un schéma analogue. En choisissant la nature, la concentration et le pH de l'éluant on peut obtenir la séparation des ions de la solution.

Pour ces séparations on utilise généralement des résines échangeuses d'ions de fine granulométrie, par exemple d'une granulométrie moyenne de 5µm, constituées soit par un copolymère styrène-divinylbenzène, soit par de la silice, greffés par des groupements échangeurs d'ions du type ammonium quaternaire ou du type sulfonique.

Les copolymères styrène-divinylbenzène ont une nette tendance à subir un phénomène de gonflement et de dégonflement au gré des modifications de force ionique du milieu. Ce phénomène est dégradant vis-à-vis des résines qui se tassent, créant ainsi un vide en tête de la colonne, ce qui diminue l'efficacité de cette dernière. Les supports en silice ne sont utilisables que dans une zone limitée de pH, c'est-à-dire un pH inférieur ou égal à 7, ce qui limite leurs possibilités d'applications.

Aussi, des recherches ont été entreprises récemment pour trouver des résines échangeuses d'ions permettant d'éviter ces inconvénients.

La présente invention concerne justement l'utilisation de résines échangeuses d'ions de structure particulière dans des procédés de chromatographie par échange d'ions, qui permet de pallier les inconvénients des résines utilisées auparavant dans ces procédés.

Le procédé, selon l'invention, de séparation chromatographique d'espèces chimiques au moyen d'une résine échangeuse d'ions par mise en contact de cette résine avec une solution contenant les espèces à séparer suivie d'une élution des espèces fixées sur la résine, se caractérise en ce que la résine échangeuse d'ions est une résine pelliculaire formée de grains composites comportant une âme inerte en un premier polymère et au moins une couche pelliculaire active en un second polymère fonctionnel greffé sur le premier polymère et portant des groupements échangeurs d'ions.

Dans ce procédé, les espèces chimiques à séparer peuvent être les isotopes d'un même élément ou des ions présents dans une solution.

Dans le cas de la séparation des isotopes d'un élément, on réalise une réaction d'échange isotopique entre un isotope de cet élément fixé sur la résine échangeuse d'ions et un autre isotope de cet élément présent dans une phase liquide en contact avec la résine échangeuse d'ions, puis on déplace l'isotope fixé par un éluant approprié.

Dans le cas de la séparation d'ions par chromatographie d'affinité, on introduit dans une colonne remplie de

la résine échangeuse d'ions la solution contenant les ions à séparer pour fixer ceux-ci sur la résine, puis on réalise l'élution des ions fixés au moyen d'un éluant approprié.

L'utilisation dans ces deux procédés de résines échangeuses d'ions dont la partie active est formée d'une couche pelliculaire permet de limiter la diffusion en rendant les sites échangeurs d'ions très accessibles. Ceci permet d'obtenir une valeur plus faible de la hauteur équivalant à un plateau théorique. Par ailleurs, en choisissant pour la réalisation de l'âme, un polymère approprié tel que le polypropylène, on peut obtenir une bonne inertie chimique, une bonne tenue dimensionnelle et un vieillissement faible de la résine.

Selon un premier mode de réalisation de l'invention, utilisable pour la séparation d'isotopes ou d'ions, les grains composites sont formés d'une âme inerte en le premier polymère entourée par une couche pelliculaire externe active en le second polymère fonctionnel portant les groupements échangeurs d'ions.

Les polymères utilisés sont en particulier obtenus à partir de monomères comportant au moins une insaturation éthylénique et un groupement fonctionnel ayant un caractère ionique ou susceptible d'être transformé en groupement à caractère ionique. Ces groupements fonctionnels peuvent être par exemple les groupements époxyde, amino, chlorométhyle, acide, hydroxyle, ...

A titre d'exemples de tels polymères, on peut citer les polymères de méthacrylate ou d'acrylate de glycidyle, de chlorométhylstyrène, de styrène sulfonate de potassium ou de sodium, de méthacrylate de diméthylaminoéthyle, de vinylpyridine, d'anhydride maléique, d'acrylate de méthyle, d'acrylate d'éthyle, d'acrylonitrile, de N-vinyl pyrrolidone, de N-vinyl carbazole, d'acide acrylique, d'acide méthacrylique, de méthacrylate de méthyle et de méthacrylate d'hydroxyéthyle. Parmi ceux-ci, on préfère généralement le polymère du chlorométhyl styrène et le polymère du méthacrylate de diméthyl aminoéthyle (MADAME).

On peut aussi greffer un monomère comportant au moins une insaturation éthylénique, puis fixer sur le polymère greffé un groupement fonctionnel ayant un caractère ionique ou susceptible d'être transformé en groupement à caractère ionique, par exemple greffer du styrène, puis chlorométhyler le polystyrène greffé.

Les polymères utilisés pour la réalisation de l'âme inerte peuvent être de différents types. On choisit de préférence des polymères sur lesquels on peut fixer facilement par greffage des monomères fonctionnels. A titre d'exemple de tels polymères, on peut citer les polyoléfines comme le polyéthylène et le polypropylène, et les polystyrènes réticulés comme les copolymères styrène-divinylbenzène.

Les grains composites échangeurs d'ions décrits ci-dessus, peuvent être obtenus en particulier par les procédés décrits dans les brevets français FR-A-2 517 682 et FR-A-2 588 263.

Selon ces procédés, pour réaliser ces grains composites, on peut préparer tout d'abord des particules de polymère semicristallin de granulométrie contrôlée, notamment en polyoléfine, en effectuant les étapes suivantes :

- dissolution du polymère à chaud et sous agitation dans un solvant jusqu'à obtenir une solution liquide homogène,
- refroidissement pour faire recristalliser le polymère sans faire apparaître une séparation de phase liquide-liquide, et
- élimination du solvant.

Lorsque le polymère est une polyoléfine telle que le polypropylène, le solvant peut être choisi par exemple, dans le groupe comprenant le xylène, l'orthodichlorobenzène, le décahydronaphtalène et le décane.

Lorsque les grains sont destinés à la séparation d'ions, la granulométrie est de préférence inférieure à 15 µm.

En effet, le remplissage d'une colonne de chromatographie doit être constitué de particules fines, de préférence environ 5 µm, afin d'obtenir une hauteur équivalant à un plateau théorique faible. De plus, les particules doivent être régulières et présenter une répartition de tailles étroite afin de permettre un remplissage très homogène.

En revanche, lorsque les grains de résine échangeuse d'ions sont destinés à la séparation isotopique, on peut utiliser des grains de dimensions plus importantes, par exemple de 100 à 500 µm, et il n'est pas toujours nécessaire de préparer ces particules par recristallisation du polymère.

On forme ensuite sur les particules de polymère une couche active par greffage d'un monomère approprié, et l'on fait réagir ensuite, si nécessaire, le polymère greffé avec le ou les réactifs voulus pour obtenir le caractère ionique.

Le greffage peut être réalisé par voie radicalaire en utilisant des peroxydes pour amorcer la polymérisation radicalaire des monomères vinyliques.

Dans ce but, on crée des sites peroxydiques sur les chaînes de polymère, sites qui serviront d'amorceurs de polymérisation radicalaire. Les peroxydes créés peuvent être soit des hydroperoxydes, soit des peroxydes de dialkyle.

Si l'on veut réaliser le greffage par voie catalytique, on crée des sites hydroperoxydes. En revanche, si l'on veut réaliser le greffage par voie thermique, on peut créer soit des sites hydroperoxydes, soit des sites peroxydes.

Lorsque les particules de polymère ont une granulométrie supérieure ou égale à 15µm, on peut réaliser la peroxydation en lit fluidifié en utilisant un courant gazeux d'azote, d'oxygène et d'ozone. Les débits respectifs des flux d'azote et d'oxygène et la puissance de l'ozoneur sont réglés de telle sorte que le lit de particules soit bien fluidisé et que la concentration en ozone soit suffisante. On peut opérer à une température allant de la température ambiante jusqu'à 50°C, pendant des durées allant jusqu'à 2 heures.

Lorsque les particules de polymère ont des dimensions inférieures ou égales à 10µm, on réalise

l'hydroperoxydation en suspension dans un solvant non sensible à l'ozone, en raison des risques d'explosion. Dans ce cas, on met en suspension les particules de polymère dans un solvant approprié tel que le tétrachloroéthane, puis on soumet la suspension à un courant ascendant d'oxygène et d'ozone en opérant à une température allant de 5 à 30° C. La durée du traitement qui dépend de la quantité d'hydroperoxyde à fixer, est généralement de 5 à 20 minutes.

Dans les deux modes de fixation de peroxydes ou d'hydroperoxydes décrits ci-dessus, on peut également opérer à des températures inférieures à la température ambiante afin de limiter la diffusion des gaz actifs dans les particules de polymère et de s'assurer ainsi que les sites peroxydiques sont bien créés en surface.

On réalise ensuite le greffage catalytique en solution ou en suspension en mettant en contact le polymère hydroperoxydé avec une solution du monomère dans un solvant approprié, en présence d'un couple redox permettant de décomposer les hydroperoxydes et d'amorcer le mécanisme de polymérisation par radicaux libres. Les couples utilisés peuvent être le couple sulfate ferreux/benzoïne, le couple sulfate ferreux/triéthylènetétramine ou un sel de cobalt tel que le naphténate et l'octoate de cobalt.

On peut aussi réaliser le greffage par voie thermique en présence seulement du monomère à greffer.

Lorsqu'on réalise le greffage catalytique du monomère en suspension, on introduit dans un réacteur une suspension du polymère hydroperoxydé dans un solvant approprié susceptible de dissoudre le monomère, par exemple du dioxanne mélangé éventuellement à de l'eau dans le cas du styrène sulfonate, et on ajoute le monomère dans la solution. On soumet la solution à un dégazage, puis on ajoute le couple redox en quantité telle qu'elle correspond à la quantité d'hydroperoxyde introduite dans le polymère.

On peut opérer à une température allant de la température ambiante à 70° C, par exemple à 60° C.

Le taux de greffage dépend en particulier de la concentration en monomère de la solution, du temps de mise en contact entre le monomère et le polymère, et de la teneur en hydroperoxyde du polymère.

Lorsque l'on réalise le greffage par voie thermique, on n'utilise pas de couple redox et on opère à une température supérieure à la température ambiante, généralement à une température supérieure à 100° C, pour obtenir la décomposition des peroxydes par voie thermique. Aussi, ceci ne peut être effectué que dans le cas de polymères et de monomères qui soient stables à température élevée.

Dans ce cas, on mélange le polymère hydroperoxydé ou peroxydé avec le monomère, puis on chauffe le tout à une température de 20 à 130° C en utilisant des vitesses de montée en température qui peuvent être par exemple de 4° C/min, puis on maintient l'ensemble à la température voulue pendant une durée appropriée pour obtenir le taux de greffage souhaité. Ce mode de greffage peut s'appliquer en particulier au styrène.

Après greffage, on modifie le polymère greffé si nécessaire pour lui conférer un caractère ionique. Lorsque l'on veut obtenir une résine échangeuse d'anions, ceci peut être effectué par quaternisation ou amination d'un groupement fonctionnel approprié présent sur le polymère greffé, par exemple par réaction avec une trialkylamine. Dans le cas où l'on veut obtenir une résine échangeuse de cations, on peut fixer sur le polymère greffé des groupes sulfoniques, par exemple au moyen d'oléums de $H_2SO_4$.

Pour obtenir les résines pelliculaires utilisables dans l'invention, on peut aussi effectuer plusieurs réactions successives ou simultanées, par exemple greffer sur le polymère un monomère tel que le styrène, fixer ensuite une fonction réactive, par exemple une fonction chlorométhyle, sur le polystyrène par réaction avec de l'éther chlorométhylique et aminer ensuite les groupes chlorométhyle ou déplacer les chlores par réaction avec un acide sulfonique d'un phénol. Cette dernière réaction de déplacement des chlores correspond au schéma suivant dans le cas du polypropylène :

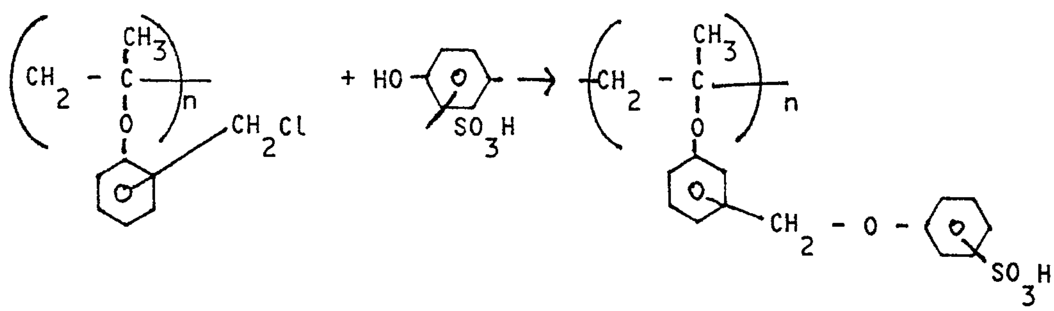

Dans le cas où le monomère greffé est du styrène, on peut le chlorométhyler en mélangeant les particules greffées à du diméthylformamide et en chauffant à 55° C pendant 1heure sous atmosphère d'azote. On refroidit ensuite à 0° C, on ajoute du $SOCl_2$ et du $ZnCl_2$ anhydre et on laisse la réaction se poursuivre à 35° C pendant 6 heures. On obtient ainsi le polystyrène chlorométhylé avec un rendement pratiquement de 100%.

Selon une variante, on peut aussi soumettre le polymère inerte, tout d'abord aux traitements de peroxydation ou d'hydroperoxydation et de greffage, puis recristalliser le polymère greffé obtenu par refroidissement contrôlé en solution homogène pour obtenir des particules de polymère greffé de dimensions voulues. Ces particuules seront ensuite soumises, si nécessaire, à un traitement pour leur conférer la

propriété d'échangeur d'ions.

Dans cette variante, le polymère greffé ne doit pas être sensible à la dégradation thermique.

Cette variante est avantageuse car on peut non seulement obtenir la taille souhaitée, mais aussi réaliser une purification complète du produit greffé et surtout rejeter les greffons amorphes à l'extérieur des particules de polymère.

Selon un deuxième mode de réalisation de l'invention, utilisable surtout pour la séparation isotopique, les grains composites sont formés de grains macroporeux en le premier polymère inerte dont les pores sont tapissés de couches actives pelliculaires en le second polymère fonctionnel portant les groupements échangeurs d'ions. Comme dans le premier mode de réalisation de l'invention les grains macroporeux peuvent être constitués en tout type de polymère inerte, par exemple en polyoléfine telle que le propylène ou en copolymère styrène-divinylbenzène. La couche pelliculaire peut être constituée de polymères greffés portant des groupements échangeurs d'ions. La formation de macropores peut être obtenue par chauffage du polymère avec un solvant ayant un point de fusion voisin de celui du polymère. Ainsi, lorsque le polymère est constitué par une polyoléfine telle que le polypropylène, dont le point de fusion est de 165° C, on peut utiliser comme solvant le 1,2,4,5-tétrachlorobenzène. On extrude ensuite le mélange fondu, puis on le trempe par exemple à l'eau ou à l'azote liquide, et on reprend le solvant par du benzène. On obtient ainsi des grains de polymère comportant des macropores. La répartition et les dimensions des macropores dépendent en particulier de la température d'extrusion et de la température de trempe.

On peut aussi fabriquer des particules macroporeuses, par exemple en copolymère styrène-divinylbenzène, par polymérisation en suspension en présence d'un agent porogène tel que l'alcool benzylique.

Comme dans le premier mode de réalisation de l'invention, on forme des couches pelliculaires actives en tapissant les pores des grains macroporeux par greffage de monomères fonctionnels ou non qui pourront être modifiés, si nécessaire, pour présenter un caractère ionique. Les monomères peuvent être choisis parmi la vinylpyridine, l'anhydride maléïque, l'acrylate de méthyle, l'acrylate d'éthyle, l'acide acrylique, l'acide méthacrylique, l'acrylonitrile, la N-vinylpyrrolidone, le N-vinylcarbazole, le méthacrylate de méthyle, le méthacrylate d'hydroxyéthyle, le styrène, le chlorométhylstyrène, le styrène sulfonate de sodium ou de potassium et le méthacrylate de diméthylaminoéthyle. Les groupes fonctionnels des monomères greffés peuvent être ensuite modifiés comme précédemment, par exemple quaternisés, aminés ou sulfonés par des réactions classiques.

L'invention a également pour objet les résines pelliculaires décrites ci-dessus dont l'âme est en polyoléfine, telle que le polypropylène.

Ces résines pelliculaires échangeuses d'ions sont formées de grains macroporeux en polyoléfine, par exemple en polypropylène, dont les pores sont tapissés de couches actives pelliculaires en polymère fonctionnel greffé sur la polyoléfine et portant des groupements échangeurs d'ions, de 20 à 100% du volume poreux des grains macroporeux étant constitué de pores ayant des dimensions entre 100 et 1000 nm.

Les résines échangeuses d'ions pelliculaires décrites ci-dessus peuvent être utilisées dans des procédés d'échange isotopique, en particulier dans les procédés de séparation des isotopes du bore, de l'azote et de l'uranium. Lorsque l'échange doit être réalisé avec une phase aqueuse, il est nécessaire de prétraiter les résines, par exemple avec du méthanol, car la plupart de ces résines ne sont pas mouillées par l'eau.

Dans le cas du bore, on peut utiliser une résine échangeuse d'ions de type anionique, fortement basique chargée d'anions borate et la mettre en contact avec une solution aqueuse d'acide borique pour réaliser l'échange isotopique. En effet, les deux isotopes du bore, $^{10}B$ et $^{11}B$, se répartissent de façon différente entre l'échangeur d'anions et la solution, c'est-à-dire que l'échangeur fixe préférentiellement les ions $^{10}BO_2$, la réaction d'échange isotopique :

$$(H^{10}BO_2)_l + (R^{11}BO_2)_s \rightleftharpoons (R^{10}BO_2)_s + (H^{11}BO_2)_l \quad (1)$$

dans laquelle les indices l et S désignent respectivement la phase liquide et la phase solide échangeuse d'anions, étant déplacée vers la droite.

Pour caractériser cette légère différence d'affinité, on peut définir un facteur des éparation alpha tel que :

$$\alpha = \frac{(^{10}B/^{11}B)_s}{(^{11}B/^{10}B)_l}$$

En pratique, alpha est très voisin de l'unité. Aussi, pour tirer parti d'un effet isotopique faible et obtenir néanmoins des enrichissements importants, par exemple la production d'acide borique titrant 90% en bore-10 à partir de bore naturel qui contient 19,85% de bore-10, on peut utiliser la méthode dite de "déplacement de bande" dans une série de colonnes. Le principe de cette séparation est le suivant : les colonnes reliées en série sont remplies de résine échangeuse d'anions sous forme "hydroxyde", c'est-à-dire débarrassées de tout anion tel que chlorure, nitrate, etc... et on forme une "bande" d'acide borique sur une certaine longueur de la résine échangeuse d'anions présente dans les colonnes successives par introduction

d'une solution d'acide borique. Dans ces conditions, l'acide borique se fixe sur la résine échangeuse d'anions de façon quantitative suivant la réaction :

$m(HBO_2)_l + (ROH)_S \rightarrow (RBO_2\ (m\text{-}1)HBO_2)_S + H_2O$ (2)

Après constitution de cette bande, on déplace celle-ci de façon continue et indéfinie à travers la série de colonnes en effectuant les opérations suivantes.

- Introduction en amont de la bande d'une solution contenant un réactif susceptible de déplacer quantitativement l'acide borique fixé par l'échangeur d'anions et de le faire passer en solution. Ce réactif peut être l'acide chlorhydrique, la réaction étant la suivante :

$(HCl)_l + (RBO_2(m\text{-}1)HBO)_S \rightarrow (RCl)_S + m(HBO_2)_l$ (3)

L'acide borique ainsi déplacé est véhiculé par la phase liquide vers l'avant de la bande où il se trouve au contact de la résine échangeuse d'anions non saturée en acide borique sur laquelle il se fixe quantitativement suivant la réaction (2).

Ainsi, la totalité de l'acide borique déplacé à l'arrière de la bande se fixe à l'avant de celle-ci et la bande garde donc une longueur constante quelle que soit la durée ou la longueur du trajet qu'on lui impose.

- Introduction d'une solution de soude pour régénérer la résine échangeuse d'anions à l'arrière de la bande et la remettre sous forme hydroxyde, puis lavage à l'eau de la résine. La régénération de la résine correspond à la réaction suivante :

$(RCl)_S + (NaOH)_l \rightarrow (ROH)_S + (NaCl)_l$

et les effluents de lavage et de régénération sont collectés à part.

- Introduction de l'acide borique déplacé par HCl dans les colonnes régénérées et lavées pour déplacer l'avant de la bande.

Ce déplacement continu et indéfini de la bande à travers les colonnes a pour résultat d'enclencher un processus de séparation isotopique, qui peut être illustré de la façon suivante.

Si l'on considère, en effet, un plan perpendiculaire à l'axe d'une colonne située à un niveau quelconque de la bande, et se déplaçant à la même vitesse que la bande, à tout instant, ce plan est traversé par un flux d'acide borique contenu dans la résine échangeuse d'anions, et donc légèrement enrichi en bore 10, et par un flux égal d'acide borique véhiculé par la solution et donc légèrement appauvri en bore-10.

Le résultat global est donc un transfert et une accumulation d'isotopes bore-10 vers l'arrière de la bande, et un transfert et une accumulation d'isotopes bore-11 vers l'avant de la bande. Aussi, en effectuant une introduction d'acide borique et des soutirages d'acide borique aux endroits voulus, on peut extraire de l'installation, de l'acide borique enrichi en bore-10 et de l'acide borique appauvri en bore-10.

Dans le cas de la séparation des isotopes de l'azote, on peut utiliser des résines pelliculaires sous forme cationique et une technique analogue de déplacement de bande. Le réactif peut être l'ammoniaque, le déplacement de la bande peut être effectué par introduction de soude et la régénération de la résine au moyen d'acide chlorhydrique.

Dans le cas des isotopes de l'uranium, plusieurs procédés peuvent être utilisés. Ceux-ci sont généralement basés sur un échange isotopique entre deux ions uranium à des valences différentes, l'un des ions étant fixé sur la résine. Ainsi, on peut utiliser des ions uranium à l'état tétravalent et à l'état hexavalent comme il est décrit dans le brevet américain 3 511 620, ou des ions d'uranium à l'état trivalent et à l'état tétravalent comme il est décrit dans le brevet français FR-A-2 282 928.

D'autres caractéristiques et avantages de l'invention apparaîtront mieux à la lecture de la description qui suit, donnée bien entendu à titre illustratif et non limitatif en référence aux dessins annexés sur lesquels :

- la figure 1 représente un grain de résine pelliculaire comportant une couche externe active,
- la figure 2 représente un grain de résine macroporeuse dont les pores sont tapissés de couches actives,
- la figure 3 représente une installation pour la séparation des isotopes du bore et de l'azote,
- la figure 4 représente une installation pour la séparation des isotopes de l'uranium, et
- la figure 5 représente une colonne de chromatographie d'affinité pour la séparation d'ions.

Les exemples 1 à 9 qui suivent illustrent la préparation de résines pelliculaires utilisables pour la séparation isotopique conformément au procédé de l'invention.

EXEMPLE 1

Dans cet exemple, on prépare des grains de résine pelliculaire comportant une âme inerte en polypropylène et une couche externe à base de méthacrylate de diméthylaminoéthyle quaternisé.

On part d'une poudre de polypropylène ayant une granulométrie de 280 à 400µm et on la soumet à un traitement de peroxydation en lit fluidisé. Dans ce but, on place dans une enceinte de fluidisation 1,3 kg de poudre de polypropylène isotactique industriel ne contenant pas d'anti-oxydant ou de composé stabilisant, dont la masse moléculaire en nombre $\overline{M}_n$ est d'environ 327000. On réalise la fluidisation de la poudre par un courant d'oxygène et d'ozone, le débit d'oxygène étant réglé à 400 l/h et la concentration en ozone étant de 12 mg/l à 90°C pendant 30 minutes. Puis la poudre est soumise à un courant d'oxygène pur de 400 l/h à 120°C pendant 1h30min, on obtient une poudre blanche contenant $18{,}5.10^{-6}$ groupements peroxydiques par gramme.

On réalise ensuite le greffage de méthacrylate de diméthylaminoéthyle (MADAME) sur la poudre en opérant de la façon suivante.

On introduit 20g de la poudre de polypropylène peroxydé dans 100 ml d'heptane contenant 60g de méthacrylate de diméthylaminoéthyle (MADAME). On introduit également dans la solution 0,012g d'acétylacétonate ferrique et 0,072g de benzoïne qui servent de catalyseur pour la réaction de polymérisation. On laisse la réaction se poursuivre à 65° C pendant 1h30 sous agitation. En fin d'opération, on sépare la poudre de polypropylène de la suspension et on la pèse. On observe un grain de poids de 4,4g et un taux de greffage de 22%.

On soumet ensuite la poudre de polypropylène greffé à un traitement de quaternisation du polyméthacrylate de diméthylaminoéthyle.

Dans ce but, on introduit dans 100ml d'acétate d'éthyle préalablement dégazé par un courant d'azote, 8g de la poudre de polypropylène greffé et 0,92ml de sulfate de diméthyle. On chauffe le mélange réactionnel pendant 24h à 30° C sous azote. On refroidit, on filtre la poudre, on la lave à l'acétone et on la sèche dans une étuve sous vide à 50° C. On récupère ainsi une résine échangeuse d'anions quaternisée qui sera désignée ci-après sous la référence N21M.

Sur la figure 1, on a représenté la structure des grains de résine ainsi obtenus. Sur cette figure, on voit qu'un grain de résine comporte une âme inerte 1 en polypropylène et une couche externe active 3 formée par le polyméthacrylate de diméthylaminoéthyle quaternisé.

## EXEMPLE 2

Cet exemple illustre la réalisation d'une résine pelliculaire comportant une âme inerte macroporeuse dont les pores sont tapissés d'une couche active à base de méthacrylate de diméthylaminoéthyle quaternisé.

On prépare tout d'abord une poudre de polymère comportant des macropores en polymérisant en suspension à 88° C, 79% de styrène avec 21% de divinylbenzène, en présence d'alcool benzylique jouant le rôle d'agent porogène qui est ajouté dans la phase organique à raison de 68% en poids de cette phase organique. On obtient ainsi des particules macroporeuses ayant une granulométrie de 280 à 400 µm et les caractéristiques suivantes :

volume poreux : 0,9 $cm^3/g$
surface spécifique : 21,1 $m^2/g$.

On greffe ensuite sur cette poudre du polyméthacrylate de diméthylaminoéthyle en opérant de la façon suivante. On imprègne 5g de résine par 5g de méthacrylate de diméthylaminoéthyle pendant une heure, puis on lave la résine à l'eau pour éliminer l'excès éventuel de monomère. On ajoute ensuite l'initiateur de polymérisation constitué par 100mg de peroxyde de benzoyle dissous dans le minimum de benzène. On introduit alors la poudre dans une phase de suspension, constituée d'eau et de gomme arabique, et on laisse réagir sous agitation pendant 4h à une température de 88°C sous courant d'azote.

Après filtration, on lave la résine au Soxhlet avec du méthanol, puis on sèche sous vide primaire à 50° C pendant 48 heures.

Une analyse par spectrométrie infrarouge de la poudre avant et après greffage, montre que le polymère est modifié car on trouve après greffage une bande carbonyle. Une analyse de porosimétrie montre une diminution du volume poreux, seuls les gros pores étant touchés. Les résultats de l'analyse porosimétrique et d'une microanalyse du produit greffé sont les suivants :

teneur en azote (en %) : 1,6
teneur en oxygène (en %) : 8,43
volume poreux : 0,3 $g/cm^3$
taux de greffage : 0,18 g/g.

On réalise ensuite un traitement de quaternisation de la façon suivante. On met en suspension la poudre de polymère greffé dans de l'acétate d'éthyle, on ajoute du sulfate de diméthyle et on agite à la température ambiante pendant 1h, puis on maintient à 30° C pendant 24h. Après quaternisation, l'analyse du produit donne les résultat suivants :

N : 1,36 %
O: 13,37 %
S : 2,77 %.

La résine échangeuse d'anions ainsi obtenue sera désignée ci-après sous la référence J5MQ.

Les grains de résine ont la structure représentée sur la figure 2, où l'on voit que la résine comprend une âme inerte 5 à base de polystyrène réticulé avec des macropores 7 qui sont tapissés intérieurement de couches pelliculaires actives 9 constituées par le polyméthacrylate de diméthylaminoéthyle quaternisé.

## EXEMPLES 3 à 6

Dans ces exemples, on utilise une autre technique pour préparer des grains macroporeux de polymère inerte. Dans ce cas, on part de polypropylène et l'on forme des macropores dans le polypropylène par chauffage avec un solvant ayant un point de fusion voisin de celui du propylène (165° C). On utilise comme solvant le 1,2,4,5-tétrachlorobenzène, puis on extrude le mélange fondu à 175° C (ex. 3 et 4) ou à 230° C (ex. 5 et 6) et on le trempe à l'eau à une température de 20° C (ex. 3 et 5) ou à l'azote liquide (ex. 4 et 6). On reprend ensuite le solvant par du benzène. On détermine ensuite les volumes poreux et les répartitions de pores des différents produits obtenus. Les résultats sont donnés dans le tableau 1 qui suit.

TABLEAU 1

| EX | TEMPERATURE D'EXTRUSION | TEMPERATURE DE TREMPE | VOLUME POREUX cm3/g | % VOLUME POREUX | | |
|---|---|---|---|---|---|---|
| | | | | PORES <100 nm | PORES entre 100 et 1000nm | PORES >1000nm |
| 3 | 175 | 20° | 0,9 | 20 | 40 | 40 |
| 4 | 175 | N2 liquide | 1,6 | 50 | 25 | 25 |
| 5 | 230 | 20° | 1,15 | 12 | 65 | 23 |
| 6 | 230 | N2 liquide | 1,20 | | > 70 | |

Au vu de ces résultats, on constate que la répartition des volumes poreux dépend de la température d'extrusion et de la température de trempe.

Les grains macroporeux obtenus peuvent être soumis ensuite au traitement de peroxydation, de greffage et de quaternisation comme dans l'exemple 1.

EXEMPLE 7

Dans cet exemple, on prépare une résine pelliculaire comportant une âme inerte en polypropylène et une couche externe active à base de chlorométhylstyrène aminé.

On part de la même poudre de polypropylène que dans l'exemple 1 et on la soumet à un traitement de peroxydation identique en lit fluidisé pour obtenir une teneur en peroxyde de $16{,}5.10^{-6}$ mole/g.

On greffe ensuite du chlorométhylstyrène sur la poudre de polypropylène peroxydé en opérant de la façon suivante.

Dans un réacteur à double enveloppe, on introduit 100g de polypropylène peroxydé, 46ml de dioxanne, 92ml de chlorométhylstyrène et $1{,}934.10^{-6}$ mole de naphténate de cobalt qui sert de catalyseur pour la réaction. On laisse la réaction se poursuivre sous agitation et sous barbotage d'azote à 65° C pendant 1h en condensant les vapeurs à l'aide d'un réfrigérant. En fin de réaction, on sépare la poudre de la partie liquide par filtration, on la lave ensuite par du toluène et on la sèche. On la soumet ensuite à un traitement d'extraction de l'homopolymère au toluène pendant une nuit à froid. On obtient ainsi un taux de polymérisation du chlorométhylstyrène de 45,32% avec un taux d'homopolymère de 5,7%, et un taux de greffage de 36,5%.

On amine ensuite le chlorométhylstyrène par la triméthylamine en opérant de la façon suivante. On mélange 50g de poudre de polypropylène greffé par le chlorométhylstyrène à 50 ou 100ml de méthylal et on laisse gonfler pendant 30 min à froid. On ajoute alors 120ml d'une solution de triméthylamine à 200 g/l dans l'eau et on laisse réagir pendant 4h30 à 40° C sous agitation. On filtre ensuite la solution, on lave la poudre de résine à l'eau, puis on la sèche et on la pèse. La réaction qui a lieu est la suivante.

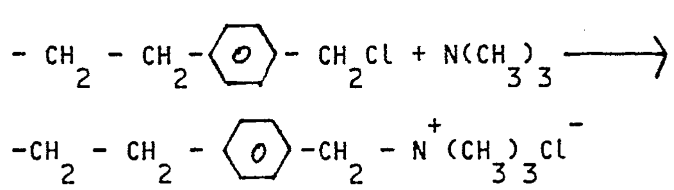

Dans ces conditions, la prise de poids des grains de poudre est de 3,5g, ce qui correspond à un rendement de 67%. Toutefois, un dosage d'azote montre que le rendement de la réaction n'est que de 43%.

La résine obtenue a la structure représentée sur la figure 1 et elle sera désignée ci-après sous les termes de PB36CL.

EXEMPLE 8

Cet exemple illustre la préparation d'une résine analogue à celle de l'exemple 7 mais dont le taux de greffage en chlorométhylstyrène n'est que de 22%.

Dans cet exemple, on suit le même mode opératoire que dans l'exemple 7 mais on réalise le greffage pendant 4h15 en utilisant 120ml de chlorométhylstyrène. Dans ces conditions le taux de polymérisation est de 43,7% avec un taux d'homopolymère de 25,4% et un taux de greffage de 22%.

On réalise ensuite le traitement d'amination du chlorométhylstyrène dans les mêmes conditions que celles de l'exemple 7 en laissant gonfler la résine pendant 15 min à froid et en effectuant la réaction pendant 1h30. Dans ces conditions, la prise de poids est de 1g, ce qui correspond à un rendement de réaction de 29% qui est confirmé en effectuant un dosage d'azote sur la résine aminée.

Cette résine présente elle aussi la structure représentée sur la figure 1 et elle sera désignée dans la suite du texte sous la référence PB22CL.

EXEMPLE 9

Cet exemple illustre la préparation d'une résine pelliculaire comportant une âme inerte en polypropylène et une couche externe active à base de chlorométhylstyrène aminé.

On part d'une poudre de polypropylène ayant une granulométrie de 130 μ m, et on la soumet à un traitement d'ozonisation dans les mêmes conditions que celles de l'exemple 1. En fin d'opération, le taux de peroxyde est de 6,9 μmol d'hydroperoxyde par gramme de polypropylène et $23.10^{-6}$ mol/g de peroxyde total. On greffe ensuite du chlorométhylstyrène en opérant comme dans les exemples 7 et 8, et l'on obtient ainsi un taux de greffage de 19,8% en poids et une teneur en chlore de 3,85% en poids. On réalise ensuite une amination en opérant de la façon suivante.

On laisse gonfler 50g du polypropylène greffé dans 50 à 100 ml de méthylal ($CH_3$-O-$CH_3$-O-$CH_3$) pendant 2 heures à froid, puis on ajoute 120 ml d'une solution de triméthylamine à 200 g/l dans l'eau. On laisse la réaction se poursuivre pendant 14h30 à 40° C sous agitation. On distille ensuite le milieu réactionnel à 50° C, puis on rince la résine à grande eau sur un tamis fin, puis sur un Buchner où on la lave tout d'abord par 500ml d'acide chlorhydrique à 3% puis par 1l d'eau distillée.

La résine aminée ainsi obtenue présente la structure représentée sur la figure 1 et elle sera désignée ci-après sous la référence SB54N.

Les résines préparées dans les exemples 1, 2, 7, 8 et 9 peuvent être utilisées pour séparer les isotopes du bore en utilisant l'installation représentée schématiquement sur la figure 3 et la technique de déplacement de bande.

Sur cette figure, on voit que l'installation comprend une pluralité de colonnes C1, C2, C3, ... Cn reliées en série par les conduites D1, D2, Dn-1 et remplies chacune de grains de résine échangeuse d'anions sous forme hydroxyde. Les conduites D1, D2, ... Dn-1 sont munies de vannes (non représentées sur le dessin) qui permettent de les raccorder à différentes sources de réactifs et de soutirer à partir de ces conduites les produits recherchés.

Pour réaliser l'échange isotopique, on introduit tout d'abord dans les colonnes par la conduite 11 de l'acide borique $H_3BO_3$ pour saturer en ions borate la résine échangeuse d'anion présente dans plusieurs colonnes successives et constituer la bande de résine chargée d'ions borate. Après cette opération, on déplace la bande dans le sens de la flèche F en introduisant maintenant par la conduite 11 de l'acide chlorhydrique 0,1N qui déplace l'anion borate de l'échangeur d'anions dans la solution aqueuse. Cet anion borate se fixe ensuite à l'avant de la bande sur la résine échangeuse d'anions qui n'a pas été saturée d'ions borate. On obtient ainsi la configuration de bande représentée sur la figure, c'est-à-dire que dans les colonnes C1 et C2 et en partie dans la colonne C3 (parties hachurées), les résines échangeuses d'anions sont maintenant sous forme Cl et que la bande de résine échangeuse d'anions occupe les autres colonnes sauf une partie de la colonne Cn-1 et la dernière colonne Cn (parties en pointillés) dans lesquelles la résine est sous forme hydroxyde. La solution qui sort de la dernière colonne par la conduite 13 est donc constituée par de l'eau.

Dans une phase suivante, on régénère la résine échangeuse d'anion sous forme $Cl^-$ dans la première colonne, après avoir supprimé les connexions de celle-ci avec les autres colonnes, en introduisant une solution de soude comme cela est représenté en C'1, puis de l'eau comme représenté en C"1 et en récupérant les effluents sortant de la colonne. Après cette phase de régénération, la colonne est sous forme hydroxyde, donc disponible pour accueillir l'avant de la bande qui sort de la colonne précédente Cn. Aussi, on connecte de nouveau la colonne C1 aux autres colonnes et on réunit la conduite 13 à la conduite 11 pour déplacer la bande dans la colonne C1 et régénérer pendant ce temps la colonne C2, et ainsi de suite.

Dans un procédé de ce type, on introduit l'acide borique naturel au milieu de la bande, soit en 14 au niveau de la colonne C6 dans la configuration représentée sur le dessin, et on prélève l'acide borique enrichi en bore 10 en fin de bande par exemple 15 à la sortie de la colonne C3 et l'acide borique appauvri en bore-10 en tête de bande, par exemple en 16 au niveau de la colonne Cn-2.

Ainsi, chacune des colonnes comporte des conduites d'introduction et de soutirage et un système de

vannes approprié pour isoler la colonne en vue des opérations de régénération ou pour introduire dans celle-ci, soit de l'acide borique naturel, soit de l'acide chlorhydrique permettant d'assurer le déplacement de la bande. Les conduites de soutirage sont également munies de systèmes de vannes appropriés permettant de relier ces soutirages à une conduite de collection de l'acide borique appauvri en bore 10 ou à une conduite de collection de l'acide borique enrichi en bore 10.

Dans le tableau 2 joint, on a illustré les conditions d'échange et les résultats obtenus en utilisant les résines échangeuses d'anions des exemples 1, 2, 7, 8 et 9 qui ont subi un prétraitement au méthanol.

Dans ce tableau, on a donné également les résultats obtenus avec une résine commerciale classique référencée A161 qui est une résine DUOLITE constituée par des grains homogènes de polystyrène avec des fonctions ammonium quaternaire. Au vu de ces résultats, on constate que :

- la hauteur équivalant à un plateau théorique HEPT (en cm) est beaucoup plus faible lorsqu'on utilise les résines de l'invention,
- la concentration en acide borique des résines de l'invention (CO) est beaucoup plus faible que celle de la résine DUOLITE. Ainsi, la capacité de fixation des résines de l'invention est de 5% à 1% de la capacité de la résine DUOLITE ; ceci permet de diminuer le hold up de l'installation et conduit à un très faible temps d'étage (3 à 20 s),
- les performances isotopiques ($\delta U_0$) sont meilleures que celles obtenues avec la résine A161 à la même granulométrie.

On précise que $\delta U_0$ représente la puissance de séparation et se calcule à partir de l'expression $\delta U_0 = (1/t)CO\varepsilon^2$ avec t représentant le temps d'étage, CO la concentration en acide borique en phase solide et $\varepsilon$ le coefficient de séparation isotopique tel que $\varepsilon = (\alpha - 1)/2$ avec $\alpha$ représentant le facteur de séparation isotopique défini par la formule :

$$\frac{N_1/1-N_1}{N_2/1-N_2}$$

dans laquelle $N_1$ et $N_2$ représentent respectivement les fractions atomiques des isotopes 1 et 2, soit $^{10}B$ et $^{11}B$ dans le cas du bore.

Les résines de l'invention peuvent également être utilisées pour la séparation des isotopes de l'azote dans une installation analogue à celle de la figure 3.

Dans ce cas les colonnes C1 à Cn sont chargées d'une résine cationique forte sous forme $H+$ et l'on introduit dans l'installation de l'ammoniaque à PH12 pour former la bande de résine chargée d'ions $NH_4+$.

On déplace ensuite la bande par introduction de soude 1,0N qui déplace les ions $NH^{4+}$ de la résine et les remplace par des ions $Na+$. Lorsqu'une colonne complète est sous forme $Na+$, on régénère celle-ci par introduction d'acide chlorhydrique suivie d'un lavage à l'eau et l'on récupère séparément les effluents comme dans le cas du bore. Après régénération, on peut amener la bande dans la colonne qui vient d'être régénérée comme c'était le cas pour la séparation des isotopes du bore. De même, on introduit la solution d'ammoniaque ayant un pH de 12 au milieu de la bande (en 14), et l'on extrait à l'avant de la bande (en 16) une solution appauvrie en azote 15 et à l'arrière de la bande (en 15) une solution enrichie en azote 15.

Sur la figure 4, on a représenté une installation de séparation des isotopes de l'uranium utilisant les résines de l'invention pour un échange isotopique entre l'uranium III et l'uranium IV.

Dans cette installation, on a représenté schématiquement en 16, la section d'échange qui comprend un ensemble de colonnes garnies de résine échangeuse d'anions disposées en série, la section de reflux riche 17 et la section de reflux pauvre 19. Après avoir chargé la résine en U(IV), on traite celle-ci dans le reflux riche 17 ou l'on déplace l'uranium IV de la résine par une phase aqueuse peu acide constituée par de l'acide chlorhydrique 0,5 N. Dans le reflux pauvre 19, on charge à nouveau en uranium IV la résine qui est ensuite soumise dans la section d'échange 16 à un échange avec la phase liquide sortant du reflux riche 17, acidifiée par introduction d'acide chlorhydrique par la conduite 20, soumise à une réduction en 21 pour ramener l'uranium à la valence III, soit par voie chimique, soit par voie électrochimique, et acidifiée de nouveau par 22. A la sortie de la section d'échange 16, la phase liquide est oxydée en 23 par le chlore formé lors de la réduction dans l'électrolyseur 21. La phase liquide contient ainsi de l'uranium IV qui est chargé sur la résine échangeuse d'anions dans le reflux pauvre 19. A la sortie du reflux pauvre, la phase liquide est désacidifiée en 25, puis introduite par la conduite 26 dans le reflux riche 17. L'acide chlorhydrique séparé dans le désacidificateur 25 est recyclé par la conduite 20 dans la phase liquide sortant du reflux riche avant et après l'étape de réduction.

On pourrait également utiliser l'installation de la figure 4 avec des résines échangeuses de cations comportant des groupes sulfoniques en fixant $U^{3+}$ sur la résine en milieu acide sulfurique d'acidité 0,5N et en réalisant la mise en contact entre la solution d'uranium IV et la résine chargée de III. Dans cette installation, on peut introduire l'uranium naturel au niveau de la section d'échange et soutirer l'uranium enrichi au niveau du reflux riche et l'uranium appauvri au niveau du reflux pauvre.

Les exemples de séparation d'isotopes donnés ci-dessus ne sont pas du tout limitatifs car on peut utiliser

les résines de l'invention avec d'autres techniques d'échanges et d'autres types d'installations, en particulier dans le cas des réactions d'échanges entre l'uranium à deux états de valence.

Les exemples 10 et 11 qui suivent illustrent la préparation de résines pelliculaires utilisables pour la séparation d'ions par chromatographie d'affinité, conformément au procédé de l'invention.

EXEMPLE 10

Cet exemple illustre la préparation de grains de résine pelliculaire comportant une âme inerte en polypropylène et une couche externe à base de chlorométhylstyrène aminé.

On met tout d'abord 10 g de polypropylène en suspension dans 300 ml de tétrachloroéthane distillé, puis on soumet la suspension à un courant ascendant de 100 l normaux/h d'oxygène ozoné sous 10 kPa (0,1 bar) avec une concentration en ozone de 32 mg/l. On réalise ce traitement à 15° C, pendant 10 min, et on fixe ainsi $13.10^{-6}$ mol d'hydroperoxyde par gramme de polypropylène.

On greffe ensuite sur le polymère hydroperoxydé du chlorométhylstyrène par greffage catalytique en suspension en opérant de la façon suivante.

On introduit 10 g de polypropylène peroxydé dans un réacteur à double enveloppe contenant 20 ml de benzène et on y ajoute 23 ml de chlorométhylstyrène. On dégaze par un courant d'azote pendant au moins 1/2 h, puis on ajoute au milieu réactionnel 0,15 ml d'octoate de cobalt. On chauffe à 65° C et on laisse la réaction se poursuivre pendant 5 h. On filtre ensuite le milieu réactionnel et on lave les particules de résine pendant 2 h au benzène dans un Soxhlet. On procède ensuite à l'amination des groupes chlorométhylstyrène en faisant réagir les particules avec de la triméthylamine pendant au moins 15 h à 45° C dans un milieu liquide contenant de l'eau et du diméthylformaldéhyde.

On obtient ainsi une résine anionique en polypropylène comportant une couche pelliculaire externe de chlorométhylstyrène aminé. Les teneurs en groupes Cl et en azote de la résine pelliculaire sont respectivement de 0,24% en poids et de 0,23% en poids.

Cette résine a la structure représentée sur la figure 1 et elle sera désignée ci-après sous la référence AM27.

EXEMPLE 11

Cet exemple illustre la fabrication d'une résine pelliculaire comportant une âme inerte en polypropylène et une couche pelliculaire active à base de chlorométhylstyrène aminé.

On part d'une poudre de polypropylène ayant une granulométrie de 130µm et on la soumet à un traitement de peroxydation en lit fluidisé.

On prépare tout d'abord des particules de polypropylène ayant une granulométrie de 10 à 15µm, puis on les soumet à un traitement de peroxydation en lit fluide par un courant d'oxygène, d'azote et d'ozone en opérant dans les conditions suivantes :

- débit d'oxygène 300 l normaux/h,
- débit d'azote 1370 l normaux/h,
- concentration en ozone 4,4 mg/l normal,
- puissance de l'ozoneur 80 Watts.

On réalise cette peroxydation pendant 10 minutes à une température de 15° C. On obtient ainsi en fin d'opération $20.10^{-6}$ mol d'hydroperoxyde par gramme de polypropylène.

On réalise ensuite le greffage de chlorométhylstyrène par greffage catalytique en suspension en opérant comme dans l'exemple précédent, sauf que l'on opère à 35° C pendant 8h30min.

On soumet ensuite la poudre greffée obtenue à un traitement de recristallisation dans du xylène effectué de la façon suivante.

On prépare une solution à 5% en poids de polypropylène greffé dans du xylène par dissolution pendant 2 h à 140° C, sous forte agitation, puis on refroidit lentement à 100° C en poursuivant l'agitation, et on verse la solution dans un bécher de forme haute à la température ambiante. On obtient ainsi une poudre recristallisée présentant une granulométrie de 4 à 5µm. On soumet alors cette poudre à un traitement d'amination réalisé comme dans l'exemple 10. La teneur de cette poudre en groupe Cl est de 0,42% en poids et sa teneur en azote de 0,19% en poids.

Les résines préparées dans les exemples 10 et 11 peuvent être utilisées pour séparer des anions par chromatographie d'affinité.

Dans ce but, on remplit une colonne de chromatographie avec la poudre de résine pelliculaire anionique, obtenue dans l'exemple 10 ou dans l'exemple 11, en opérant de la façon suivante.

On met tout d'abord la résine en suspension dans un mélange eau-méthanol dont la composition est telle que la résine ne décante pas. On place alors cette suspension dans une buse d'injection en amont de la colonne et on l'injecte dans la colonne au moyen de méthanol à l'aide d'une pompe continue en montant progressivement la pression jusqu'à 15 MPa. On maintient cette pression pendant une heure, puis on revient à la pression atmosphérique. On ferme alors la colonne et on la rince par une solution eau-méthanol que l'on enrichit progressivement en eau jusqu'à effectuer le rinçage par de l'eau pure. On fait alors passer sur la résine une solution de KOH $10^{-2}$ M pour mettre la résine anionique sous forme hydroxyde. On obtient ainsi la colonne de chromatographie représentée sur la figure 5.

Sur cette figure 5, on voit que la colonne 41 est remplie de résine anionique 43 et munie à sa partie

supérieure d'un conduit 45 d'introduction de la solution d'ions à séparer ou de l'éluant, et à sa partie inférieure d'un conduit 47 par lequel on récupère, soit la solution appauvrie en ions, soit l'éluant chargé successivement des différents ions. Cette colonne est réalisée en acier inoxydable, elle a un diamètre interne de 4,6 mm et une hauteur de 10 à 20 cm. Son taux de remplissage moyen est de 0,1 g/cm.

On utilise cette colonne pour séparer les ions $NO_3^-$ et $I^-$ au moyen de la résine AM27 de l'exemple 10, et pour séparer les ions $Cl^-$, $NO_3^-$ et $SO_4^{2-}$ en utilisant la résine AMI7RX de l'exemple 11.

Dans le premier cas, on introduit par la conduite 45 dans la colonne 41 20µ l d'une solution aqueuse contenant des ions $NO_3^-$ et $I^-$ . Après fixation de ces ions sur la résine échangeuse d'anions 43, on réalise l'élution en introduisant par la conduite 45, à un débit de 1 ml/min, une solution aqueuse contenant $0,5.10^{-3}$ mol/l d'hydrogénophtalate de potassium, dont le pH a été ajusté à 3. On recueille l'éluat par la conduite 47 et on l'analyse par conductimétrie pour déterminer à quels moments apparaissent les ions $NO_3^-$ et les ions $I^-$. On détermine ainsi les temps de rétention des ions dans la colonne, c'est-à-dire le temps qui correspond au temps de sortie de l'ion fixé, moins le temps de sortie d'un produit non fixé tel que l'eau. Les résultats obtenus sont donnés dans le tableau 3 joint.

Dans le second cas, on introduit par la conduite 45 20µl d'une solution aqueuse contenant des ions $Cl^-$, $NO_3^-$ et $SO_4^{2-}$. Après fixation des ions, on réalise l'élution en introduisant par la conduite 45, à un débit de 1 ml/min, une solution aqueuse contenant $0,5.10^{-3}$ mol/l d'hydrogénophtalate de potassium dont le pH a été ajusté à 4. On mesure comme précédemment les temps de rétention des ions dans la colonne. Les résultats obtenus sont donnés dans le tableau 3 joint.

Bien que les exemples donnés ci-dessus illustrent la séparation d'ions constitués par des anions, il va de soi que la présente invention s'applique également à la séparation des cations. Dans ce cas, on utilise une résine cationique, par exemple une résine sulfonée et on la met sous forme $H^+$ en début d'opération, en faisant passer dans la colonne une solution acide par exemple une solution diluée d'acide nitrique.

Les séparations d'ions peuvent être réalisées en chromatographie préparative, par exemple pour la déminéralisation ou l'adoucissement des eaux. On peut aussi effectuer des chromatographies analytiques pour déceler les ions, par exemple dans le domaine biomédical pour l'analyse de liquides corporels tels que le sang et l'urine, ou pour le contrôle de la pollution des eaux.

L'exemple 12 qui suit illustre la préparation d'une résine échangeuse de cations.

## EXEMPLE 12

On prépare comme dans l'exemple 10, 7 g de polypropylène peroxydé. On les mélange ensuite à 14 g de styrène sulfonate de potassium dans 50 ml d'eau et 20 ml de dioxanne.On ajoute un couple redox formé par $FeSO_4$, $7H_2O$/triéthylène tétramine. On laisse la réaction se poursuivre pendant 24 h à 70° C, puis on filtre le milieu réactionnel.

On récupère ainsi une résine échangeuse de cations que l'on purifie par lavage à l'eau. La résine porte 0,90% en poids de soufre.

TABLEAU 2

| RESINE | N21M EX.1 | J5MQ EX.2 | PB36CL EX.7 | PB22CL EX.8 | SB54N EX.9 | RESINE COMMERCIALE A161 |
|---|---|---|---|---|---|---|
| Granulométrie (µm) | 280 à 400 | 280 à 400 | 280 à 400 | 200 | 130 | 200 |
| CL[1] (mole/l) | 0,300 | 0,206 | 0,208 | 0,208 | 0,118 | 0,548 |
| DL[2] (l/h) | 0,800 | 1,00 | 1,00 | 1,00 | 0,480 | 0,774 |
| a[3] (cm/s) | 0,0674 | 0,0559 | 0,1706 | 0,1773 | 0,0068 | 0,0078 |
| CO[4] (mole/l) | 0,225 | 0,293 | 0,0454 | 0,0410 | 0,697 | 4,63 |
| R[5] | 0,40 | 0,211 | 1,374 | 1,51 | 0,0508 | 0,0355 |
| t[6] | 11,7 | 20,89 | 3,61 | 2,13 | 79 | 405,8 |
| HEPT[7] (cm) | 0,79 | 1,17 | 0,62 | 0,38 | 0,54 | 3,16 |
| δUO[8] (UTS/m3 an) | 152 | 111 | 99 | 151 | 70 | 90 |

1.CL : concentration en acide borique en phase liquide.

2.DL : débit d'introduction d'acide borique dans les colonnes.

3.a : avance du front de la bande.

4.CO : concentration en acide borique en phase solide.

5 R : rapport des hold-up (liquide/solide).

6 t : temps d'étage.

7 HEPT : hauteur équivalant à un plateau théorique.

8 $\delta U_0$ : puissance de séparation.

B 9333.3 MDT

TABLEAU 3

| Résine | Taille | %Cl en poids | %N en poids | hauteur de la colonne | Eluant | Nature des ions | Temps de rétention |
|---|---|---|---|---|---|---|---|
| AM27<br><br><br>EX.10 | 10 - 15 µm | 0,24 | 0,23 | 10 cm | Hydrogénophtalate de potassium $0,5 \times 10^{-3}$ M pH=3 1ml/min | $NO_3^-$<br><br><br>$I^-$ | $trNO_3^-$=3,2min<br><br><br>$trI^-$=5,7min |
| AM17<br><br>RX<br><br>EX.11 | 4-5 µm | 0,42 | 0,19 | 15 cm | idem<br><br>pH=4 | $Cl^-$<br><br>$NO_3^-$<br><br>$SO_4^{2-}$ | $trCl^-$=2,7min<br><br>$trNO_3^-$=3,8min<br><br>$trSO_4^{2-}$= 7,2 min |

**Revendications**

1. Procédé de séparation chromatographique d'espèces chimiques au moyen d'une résine échangeuse d'ions par mise en contact de cette résine avec une solution contenant les espèces à séparer suivie d'une élution des espèces fixées sur la résine, caractérisé en ce que la résine échangeuse d'ions est une résine pelliculaire formée de grains composites comportant une âme inerte (1, 5) en un premier polymère et au moins une couche pelliculaire active (3, 9) en un second polymère fonctionnel greffé sur le premier polymère et portant des groupements échangeurs d'ions.

2. Procédé selon la revendication 1, caractérisé en ce que les grains composites sont formés d'une âme inerte (1) en le premier polymère entourée d'une couche pelliculaire externe active (3) en le second polymère fonctionnel portant les groupements échangeurs d'ions.

3. Procédé selon la revendication 1, caractérisé en ce que les grains composites sont formés de grains macroporeux (5) en le premier polymère inerte dont les pores (7) sont tapissés de couches actives pelliculaires (9) en le second polymère fonctionnel portant les groupements échangeurs d'ions.

4. Procédé selon l'une quelconque des revendications 2 et 3, caractérisé en ce que les espèces

chimiques à séparer sont les isotopes d'un même élément, et en ce que l'on réalise une réaction d'échange isotopique entre un isotope de cet élément fixé sur la résine échangeuse d'ions et un autre isotope de cet élément présent dans une phase liquide en contact avec la résine échangeuse d'ions.

5. Procédé selon la revendication 2, caractérisé en ce que les espèces chimiques à séparer sont des ions.

6. Procédé selon la revendication 4, caractérisé en ce que l'élément est le bore.

7. Procédé selon la revendication 4, caractérisé en ce que l'élément est l'azote.

8. Procédé selon la revendication 4, caractérisé en ce que l'élément est l'uranium.

9. Procédé selon l'une quelconque des revendications 1 à 8, caractérisé en ce que le polymère greffé est choisi dans le groupe comprenant le polymère du chlorométhylstyrène ou celui du méthacrylate de diméthylaminoéthyle.

10. Procédé selon l'une quelconque des revendications 1 à 8, caractérisé en ce que la ou les couches pelliculaires sont formées de polymère de méthacrylate de diméthylaminoéthyle greffé et quaternisé.

11. Procédé selon l'une quelconque des revendications 1 à 8, caractérisé en ce que la ou les couches pelliculaires sont formées de polymère de chlorométhylstyrène aminé.

12. Procédé selon l'une quelconque des revendications 1 à 11, caractérisé en ce que l'âme inerte est en polyoléfine ou en polystyrène réticulé.

13. Procédé selon l'une quelconque des revendications 1 à 11, caractérisé en ce que l'âme inerte est en polypropylène.

14. Résine pelliculaire échangeuse d'ions formée de grains macroporeux en polyoléfine dont les pores sont tapissés de couches actives pelliculaires en polymère fonctionnel greffé sur la polyoléfine et portant des groupements échangeurs d'ions, de 20 à 100% du volume poreux des grains macroporeux étant constitué de pores ayant des dimensions entre 100 et 1000 nm.

15. Résine selon la revendication 14, caractérisée en ce que la polyoléfine est du polypropylène.

0297994

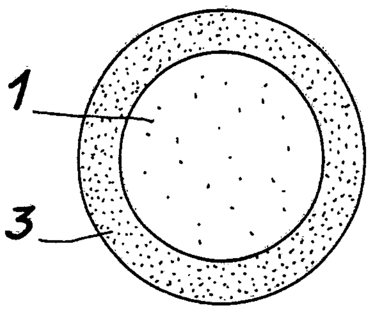


FIG. 1

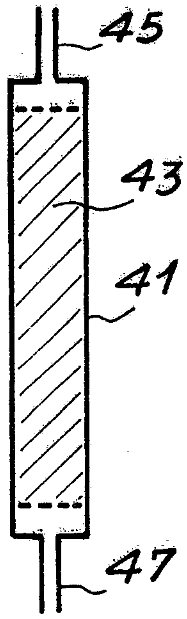


FIG. 5

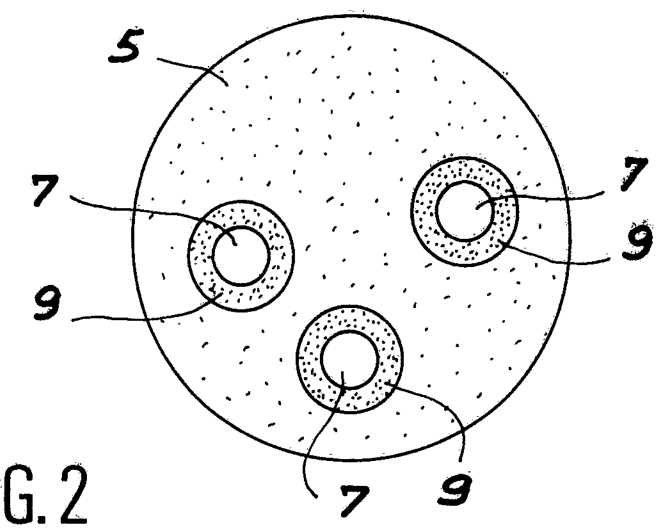


FIG. 2

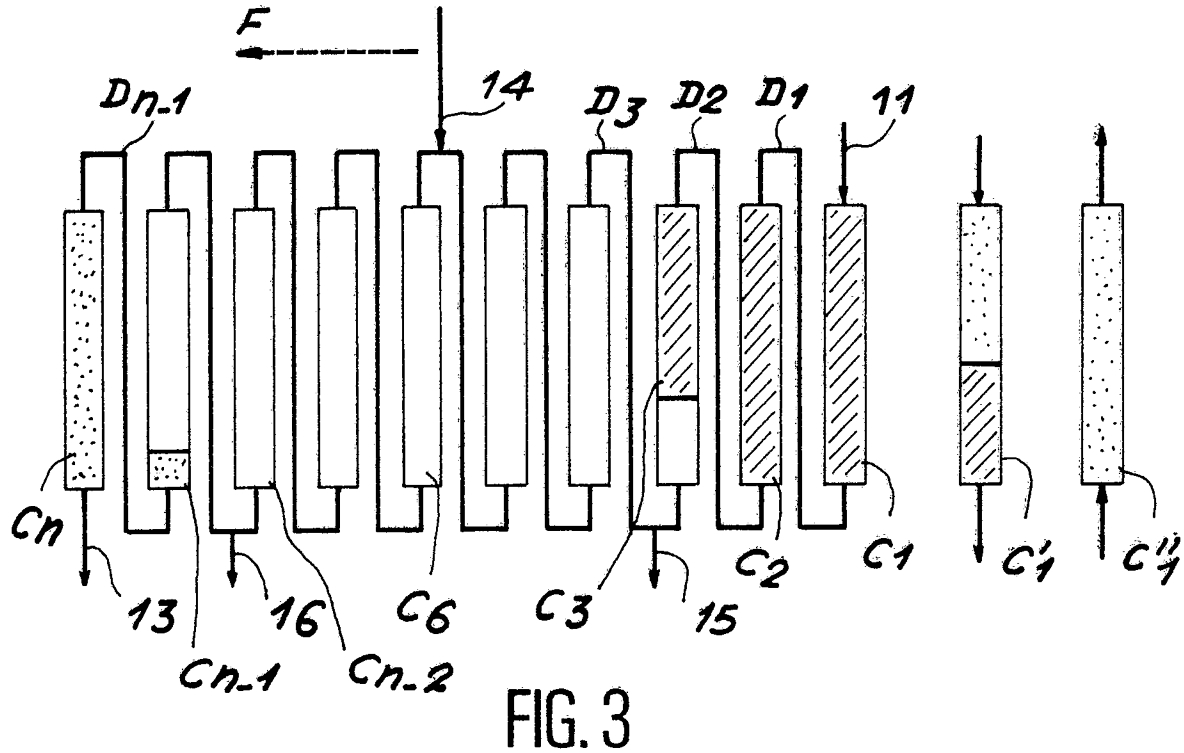
F
14
Dn-1
D3
D2
D1
11
Cn
13
16
Cn-1
Cn-2
C6
C3
15
C2
C1
C'1
C''1

FIG. 3

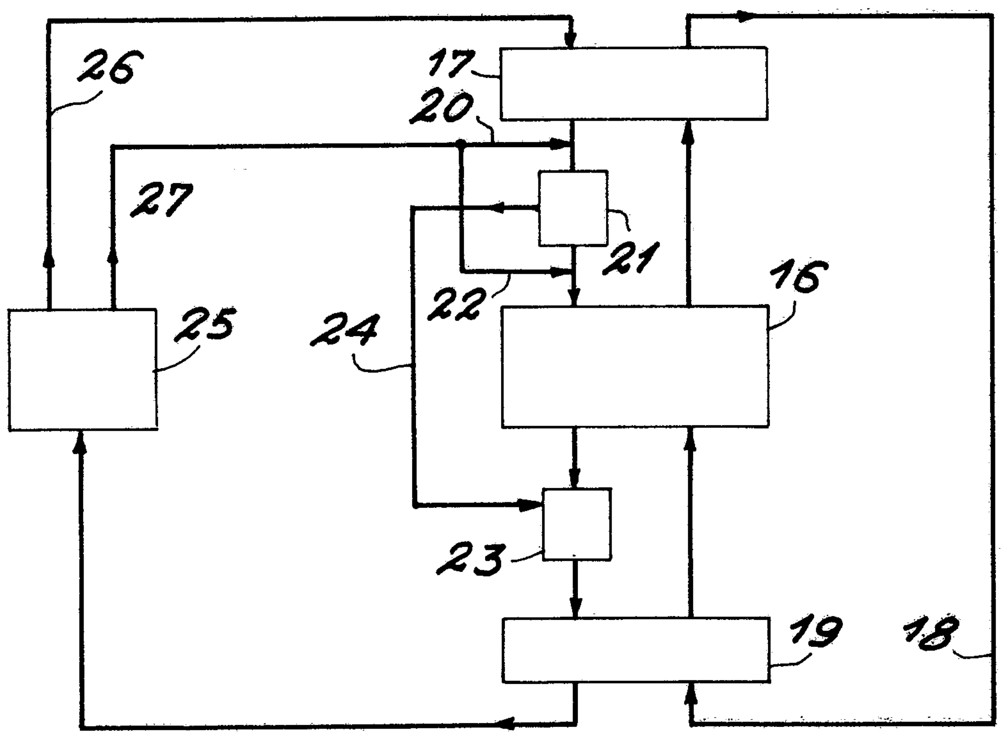
26
17
20
27
21
22
16
25
24
23
19
18

FIG 4